# EUROPEAN PATENT SPECIFICATION

(11) **EP 4 579 901 B1**
(45) Date of publication and mention of the grant of the patent: **15.04.2026**
(21) Application number: 24222339.4
(22) Date of filing: 20.12.2024
(51) Int. Cl.: H01M 50/152, H01M 50/213, H01M 50/284, H01M 50/287, H01M 50/289, H01M 50/503, H01M 50/514

(54) **BATTERY STRUCTURE AND BATTERY MODULE**
BATTERIESTRUKTUR UND BATTERIEMODUL
STRUCTURE DE BATTERIE ET MODULE DE BATTERIE

(30) Priority: 29.12.2023 US 202318399723
(43) Date of publication of application: 02.07.2025
(73) Proprietor: Xing Power Inc., Victoria, Mahe (SC)
(72) Inventor: Lin, Yu-Chung, 333 Taoyuan City (TW); Dai, Shang-Chih, 333 Taoyuan City (TW); Chi, Yu-Shun, 333 Taoyuan City (TW)
(74) Representative: Straus, Alexander

(56) References cited:
- EP-A1- 3 428 994
- US-A1- 2017 222 207

## Description

### Field of the Invention

The present invention relates to a battery structure and a battery module, particularly a battery structure and a battery module equipped with a conductive elastic member for achieving electrical connection between two battery modules.

### Background of the Invention

Cell-to-pack (CTP) battery design is a manufacturing process used to create lithium-ion battery packs by directly integrating individual battery cells into the pack without using modular-based configuration. A battery pack may include a plurality of CTP battery modules assembled with each other to provide required voltage and capacity. However, the CTP battery modules need to be assembled by additional components to achieve electrical connection, such that the assembly process is complicated and waste time, and the cost increases due to additional components.

EP3428994A1 discloses a battery structure and a battery module corresponding to the preambles of claims 1 and 9 respectively.

### Summary of the Invention

The present invention aims at providing a battery structure and a battery module equipped with a conductive elastic member for achieving electrical connection between two battery modules, thereby resolving the aforesaid problems.

This is achieved by a battery structure according to claim 1 and a battery module according to claim 9. The dependent claims pertain to corresponding further developments and improvements.

As will be seen more clearly from the detailed description following below, the claimed battery structure includes two battery modules and a conductive elastic member. The two battery modules are stacked with each other. Each of the two battery modules includes a housing, a plurality of battery cells, a first holder, a second holder, a first conductive plate and a second conductive plate. The plurality of battery cells are disposed in the housing. The first holder accommodates an end of each of the plurality of battery cells. The second holder accommodates another end of each of the plurality of battery cells. The first conductive plate is disposed on the first holder and electrically connected to the plurality of battery cells. The second conductive plate is disposed on the second holder and electrically connected to the plurality of battery cells. The conductive elastic member is disposed between and in contact with the first conductive plate and the second conductive plate of the two battery modules.

As will be seen more clearly from the detailed description following below, the claimed battery module includes a housing, a plurality of battery cells, a first holder, a second holder, a first conductive plate, a second conductive plate and a conductive elastic member. The plurality of battery cells are disposed in the housing. The first holder accommodates an end of each of the plurality of battery cells. The second holder accommodates another end of each of the plurality of battery cells. The first conductive plate is disposed on the first holder and electrically connected to the plurality of battery cells. The first conductive plate has two first restraining portions. The second conductive plate is disposed on the second holder and electrically connected to the plurality of battery cells. The conductive elastic member is restrained on the first conductive plate by the two first restraining portions.

### Brief Description of the Drawings

In the following, the invention is further illustrated by way of example, taking reference to the accompanying drawings thereof:
FIG. 1 is a perspective view illustrating a battery structure according to an embodiment of the invention,
FIG. 2 is an exploded view illustrating the battery structure shown in FIG. 1,
FIG. 3 is an exploded view illustrating the battery structure shown in FIG. 1 from another viewing angle,
FIG. 4 is a sectional view illustrating the battery structure shown in FIG. 1,
FIG. 5 is an exploded view illustrating the inside of a battery module shown in FIG. 2,
FIG. 6 is an enlarged view illustrating parts of the battery module shown in FIG. 2,
FIG. 7 is an enlarged view illustrating a first pad and a second pad shown in FIG. 5,
FIG. 8 is a perspective view illustrating a battery module according to another embodiment of the invention, and
FIG. 9 is an enlarged view illustrating parts of the battery module shown in FIG. 8.

### Detailed Description

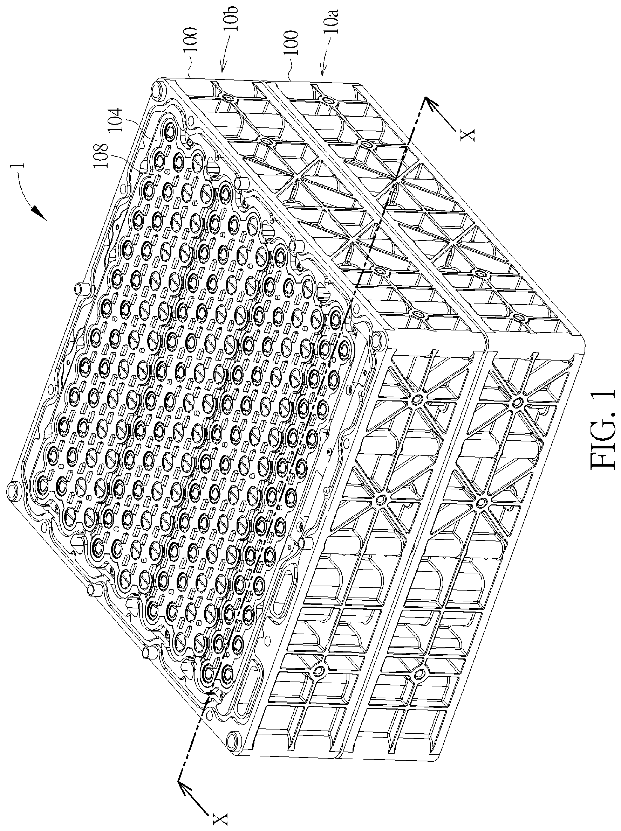

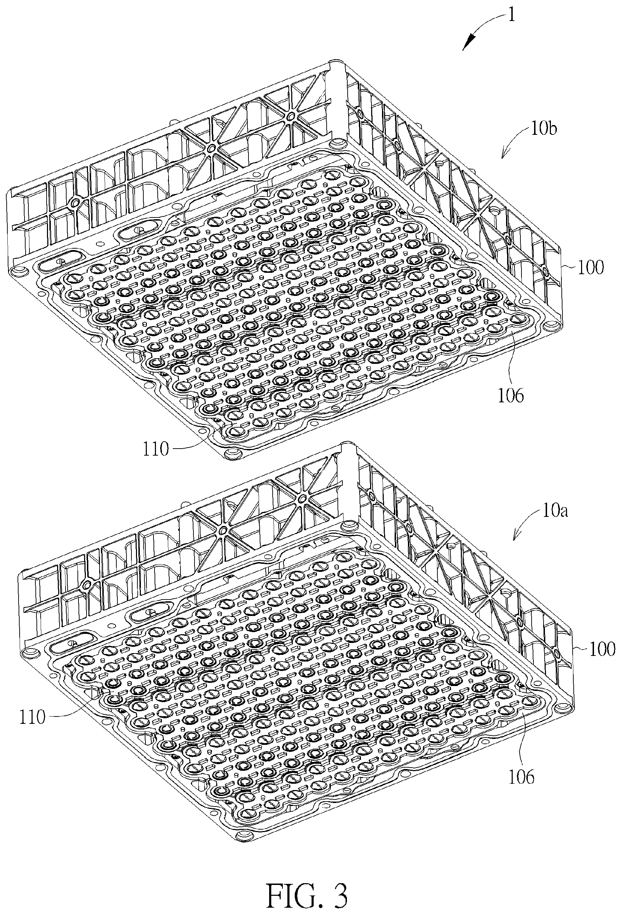

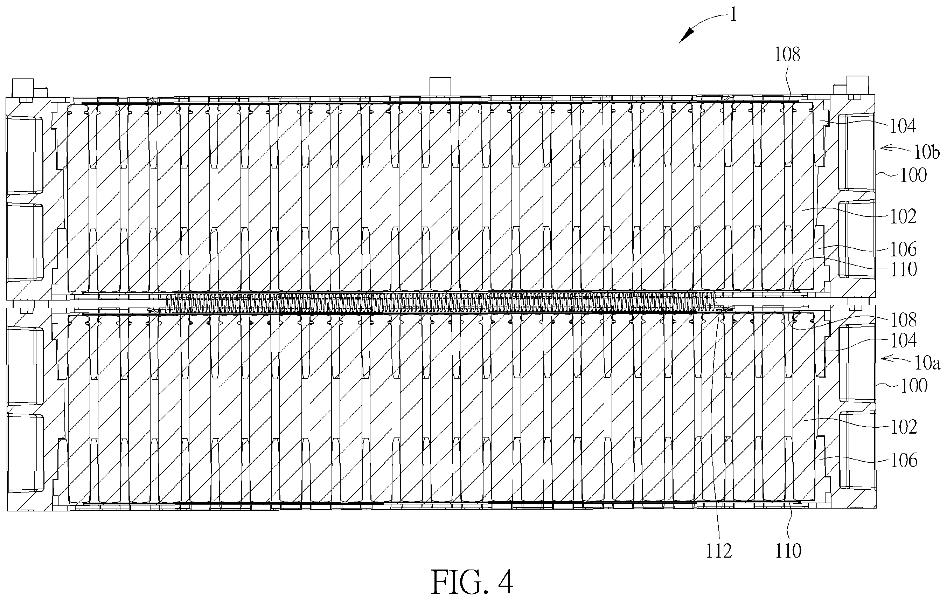

As shown in FIGs. 1 to 4, the battery structure 1 of the invention comprises two battery modules 10a, 10b, wherein the two battery modules 10a, 10b are stacked with each other. Furthermore, the battery structure 1 further comprises a conductive elastic member 112 disposed between and in contact with a first conductive plate 108 and a second conductive plate 110 of the two battery modules 10a, 10b, so as to achieve electrical connection between the two battery modules 10a, 10b. It should be noted that the number of battery modules may be determined according to practical applications, so the invention is not limited to the embodiment shown in the figures.

Each of the two battery modules 10a, 10b comprises a housing 100, a plurality of battery cells 102, a first holder 104, a second holder 106, a first conductive plate 108 and a second conductive plate 110. The battery cells 102 are disposed in the housing 100. The first holder 104 accommodates an end of each of the battery cells 102, and the second holder 106 accommodates another end of each of the battery cells 102. In this embodiment, the first holder 104 may have a plurality of accommodating holes 1040 for accommodating the battery cells 102, and the second holder 106 may also have a plurality of accommodating holes 1060 for accommodating the battery cells 102.

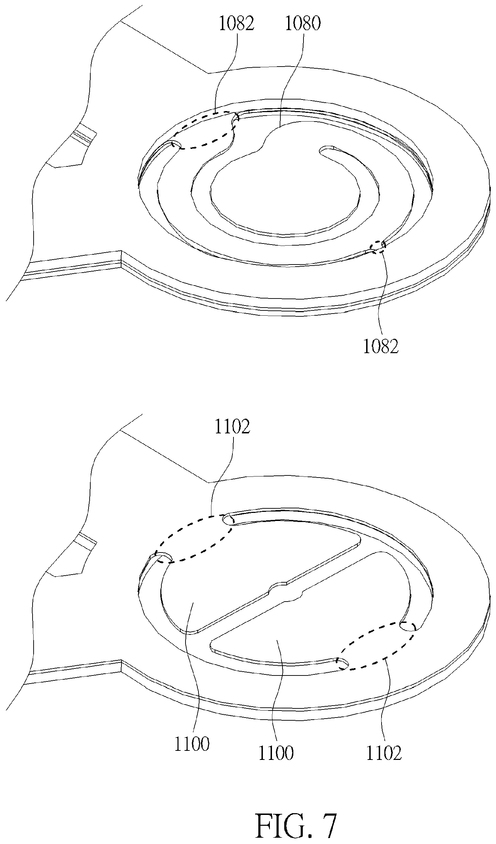

The first conductive plate 108 is disposed on the first holder 104 and electrically connected to the battery cells 102. Similarly, the second conductive plate 110 is disposed on the second holder 106 and electrically connected to the battery cells 102. For further explanation, the first conductive plate 108 may have a plurality of first pads 1080 in contact with the battery cells 102, and the second conductive plate 110 may have a plurality of second pads 1100 in contact with the battery cells 102. The first pads 1080 and the second pads 1100 may be soldered with the positive and negative terminals of the battery cells 102. Furthermore, a shape of each of the first pads 1080 may be different from a shape of each of the second pads 1100, as shown in FIG. 7.

In this embodiment, each of the first pads 1080 is connected to the first conductive plate 108 by at least one first connecting portion 1082, each of the second pads 1100 is connected to the second conductive plate 110 by at least one second connecting portion 1102, and a total cross-sectional area of the at least one first connecting portion 1082 is smaller than a total cross-sectional area of the at least one second connecting portion 1102. For example, each of the first pads 1080 may consist of two semicircular structures connected to the first conductive plate 108 by two first connecting portions 1082, and each of the second pads 1100 may be a spiral structure connected to the second conductive plate 110 by two second connecting portions 1102. In this case, the total cross-sectional area of the two first connecting portions 1082 is smaller than the total cross-sectional area of the two second connecting portions 1102. Accordingly, when the current exceeds the design value, the two first connecting portions 1082 will be burned out first, thereby causing the corresponding battery cell 102 to form an open circuit. Therefore, the invention can provide over-current protection function for each of the battery cells 102.

It should be noted that the number of first conductive plates 108 and second conductive plates 110 may be determined according to practical applications. Furthermore, the first conductive plate 108 may also have a plurality of second pads 1100 and the second conductive plate 110 may also have a plurality of first pads 1080. Therefore, the invention may adjust the number of battery modules, first conductive plates 108 and second conductive plates 110, and adjust the series and parallel connection of battery cells by the arrangement of first pads 1080 and second pads 1100, so as to adjust the voltage and capacity of the battery structure.

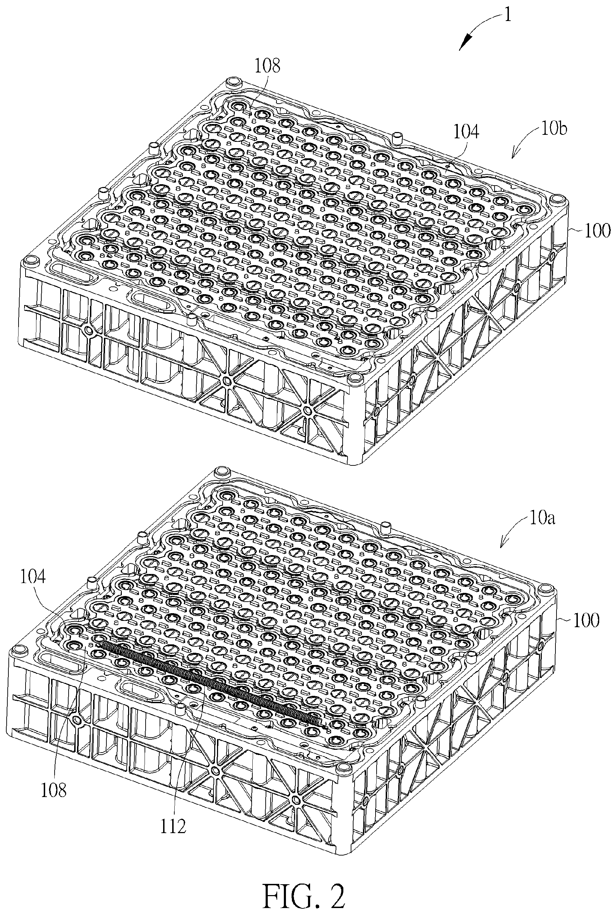

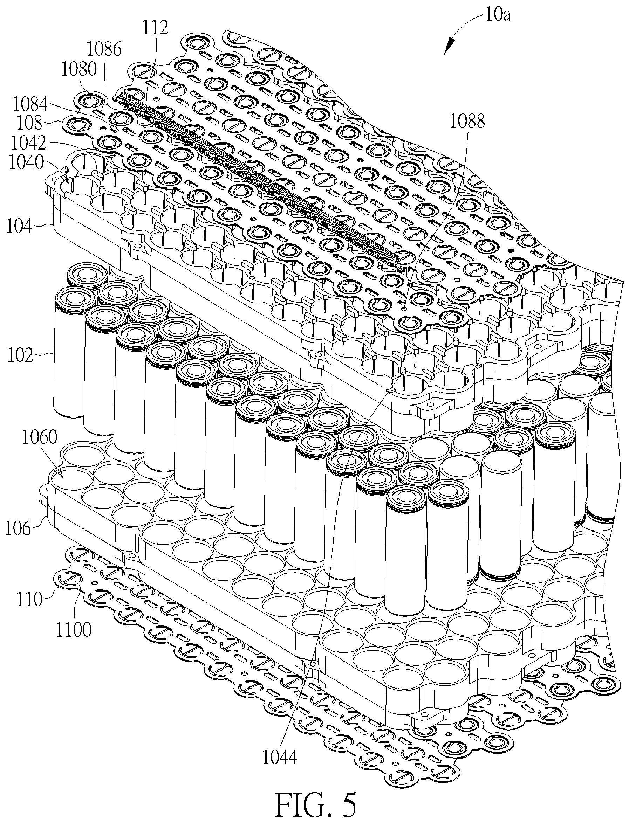

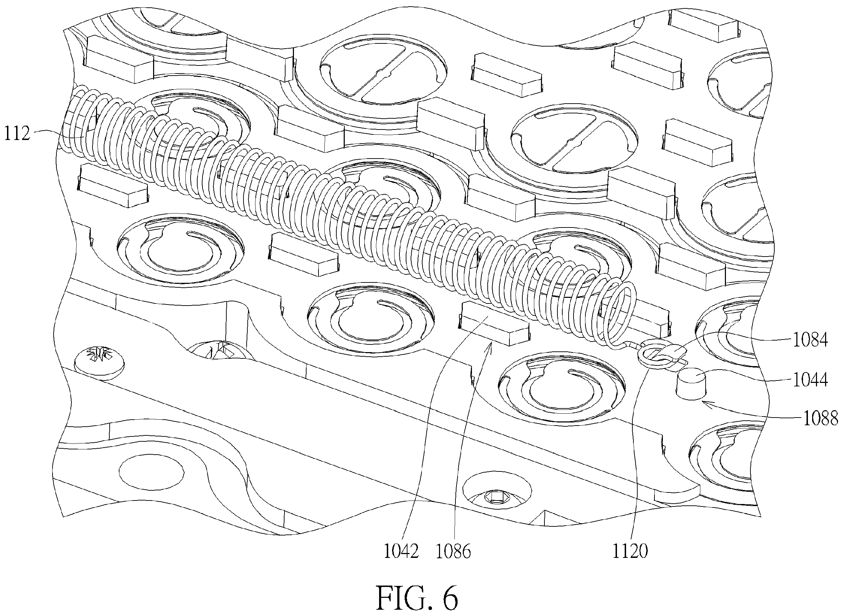

As shown in FIGs. 2, 5 and 6, the battery module 10a further comprises the conductive elastic member 112 disposed on the first conductive plate 108. In this embodiment, the first conductive plate 108 of the battery module 10a may have two first restraining portions 1084, and the conductive elastic member 112 may be restrained on the first conductive plate 108 by the two first restraining portions 1084. For example, the conductive elastic member 112 may be a coil spring with two ring-shaped ends 1120, and the two ring-shaped ends 1120 are hooked by the two first restraining portions 1084, so as to restrain the conductive elastic member 112 on the first conductive plate 108. The two first restraining portions 1084 may be bent from the first conductive plate 108, but the invention is not so limited.

Furthermore, the first holder 104 may have a plurality of second restraining portions 1042 and the first conductive plate 108 may further have a plurality of through holes 1086. When the first conductive plate 108 is disposed on the first holder 104, the second restraining portions 1042 pass through the through holes 1086. Then, after the conductive elastic member 112 is disposed on the first conductive plate 108, the second restraining portions 1042 are located at opposite sides of the conductive elastic member 112 in a radial direction of the conductive elastic member 112. In this embodiment, the second restraining portions 1042 may be interlacedly located at the opposite sides of the conductive elastic member 112. Thus, when the battery module 10b is stacked on the battery module 10a and compresses the conductive elastic member 112, the conductive elastic member 112 will deform elastically and the second restraining portions 1042 can restrain the position of the conductive elastic member 112. In addition, the compression of the conductive elastic member 112 may be adjusted by the height of the second restraining portions 1042. For example, the height of the second restraining portions 1042 may be smaller than half the height of the conductive elastic member 112, but the invention is not so limited. Still further, the second restraining portions 1042 may extend to the accommodating holes 1040 to restrain the battery cells 102 in the accommodating holes 1040.

Moreover, the first holder 104 may have a plurality of positioning portions 1044 and the first conductive plate 108 may further have a plurality of positioning holes 1088. When the first conductive plate 108 is disposed on the first holder 104, the positioning portions 1044 pass through the positioning holes 1088 to position the first conductive plate 108 on the first holder 104. In this embodiment, the positioning portions 1044 may be made of plastic material, such that the positioning portions 1044 may be melted to tightly fix the first conductive plate 108 on the first holder 104.

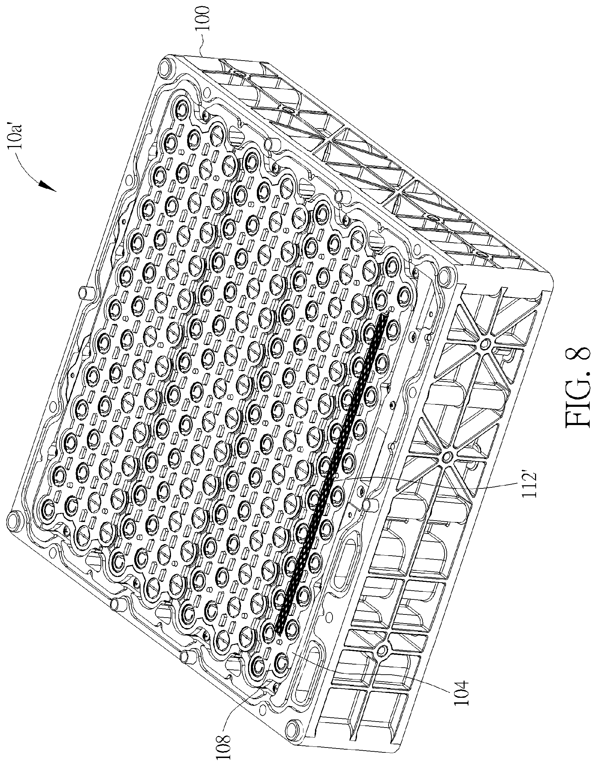

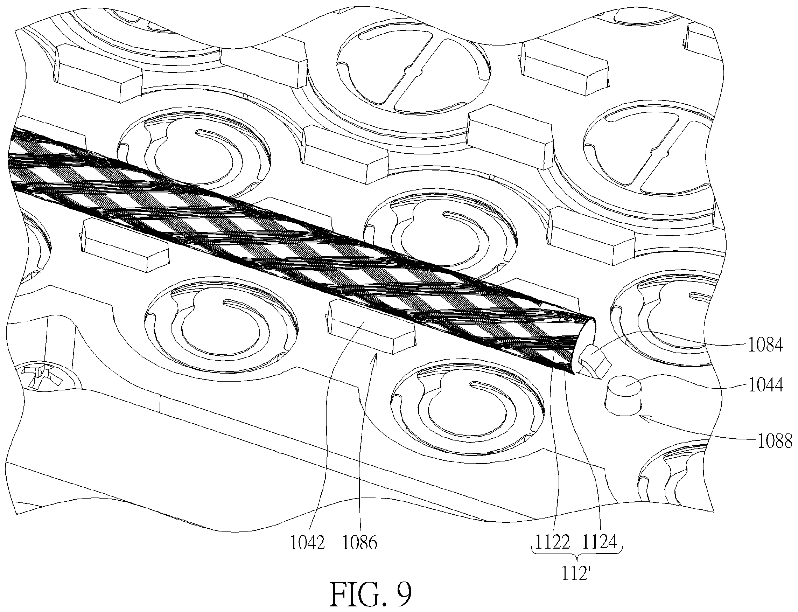

Referring to FIGs. 8 and 9, the main difference between the battery module 10a' and the aforesaid battery module 10a is that the conductive elastic member 112' of the battery module 10a' comprises an elastic structure 1122 and a conductive material 1124, wherein the elastic structure 1122 is covered with the conductive material 1124, as shown in FIGs. 8 and 9. The elastic structure 1122 may be made of rubber, sponge or other elastic materials, and the conductive material 1124 may be made of conductive metal. In this embodiment, the two first restraining portions 1084 of the first conductive plate 108 may abut against two ends of the elastic structure 1122, so as to restrain the conductive elastic member 112' on the first conductive plate 108.

The battery module 10a shown in FIGs. 1 to 4 may be replaced by the battery module 10a' shown in FIG. 8. When the battery module 10b is stacked on the battery module 10a' and compresses the conductive elastic member 112', the conductive elastic member 112' will deform elastically and the second restraining portions 1042 can restrain the position of the conductive elastic member 112'. Thus, the conductive elastic member 112' is disposed between and in contact with the first conductive plate 108 and the second conductive plate 110 of the two battery modules 10a', 10b, so as to achieve electrical connection between the two battery modules 10a', 10b.

As mentioned in the above, the invention disposes the conductive elastic member between the two battery modules to achieve electrical connection. Accordingly, the two battery modules do not need to be assembled by additional components, such that the assembly process can be simplified to save time and the cost can be reduced. Furthermore, when the two battery modules are stacked with each other, the conductive elastic member will be compressed to deform elastically, such that the conductive elastic member will be in contact with the first conductive plate and the second conductive plate of the two battery modules tightly, so as to absorb assembly tolerance and ensure electrical connection between the two battery modules.

## Claims

1. A battery structure (1) comprising
two battery modules (10a, 10a', 10b) stacked with each other, each of the two battery modules (10a, 10a', 10b) comprising:
a housing (100);
a plurality of battery cells (102) disposed in the housing (100);
a first holder (104) accommodating an end of each of the plurality of battery cells (102);
a second holder (106) accommodating another end of each of the plurality of battery cells (102);
a first conductive plate (108) disposed on the first holder (104) and electrically connected to the plurality of battery cells (102); and
a second conductive plate (110) disposed on the second holder (106) and electrically connected to the plurality of battery cells (102); **characterized by**
a conductive elastic member (112, 112') disposed between and in contact with the first conductive plate (108) and the second conductive plate (110) of the two battery modules (10a, 10a', 10b).

2. The battery structure (1) of claim 1 further **characterized in that** the first conductive plate (108) of one of the two battery modules (10a, 10a') has two first restraining portions (1084), and the conductive elastic member (112, 112') is restrained on the first conductive plate (108) by the two first restraining portions (1084).

3. The battery structure (1) of claim 2 further **characterized in that** the conductive elastic member (112) is a coil spring with two ring-shaped ends (1120), and the two ring-shaped ends (1120) are hooked by the two first restraining portions (1084).

4. The battery structure (1) of claim 2 further **characterized in that** the conductive elastic member (112') comprises an elastic structure (1122) and a conductive material (1124), the elastic structure (1122) is covered with the conductive material (1124), and the two first restraining portions (1084) abut against two ends of the elastic structure (1122).

5. The battery structure (1) of claim 1 further **characterized in that** the first holder (104) has a plurality of second restraining portions (1042), the first conductive plate (108) further has a plurality of through holes (1086), and the plurality of second restraining portions (1042) pass through the plurality of through holes (1086) and are located at opposite sides of the conductive elastic member (112, 112') in a radial direction of the conductive elastic member (112, 112').

6. The battery structure (1) of claim 5 further **characterized in that** the first holder (104) further has a plurality of accommodating holes (1040) for accommodating the plurality of battery cells (102), and the plurality of second restraining portions (1042) extend to the plurality of accommodating holes (1040) to restrain the plurality of battery cells (102) in the plurality of accommodating holes (1040).

7. The battery structure (1) of claim 1 further **characterized in that** the first holder (104) has a plurality of positioning portions (1044), the first conductive plate (108) further has a plurality of positioning holes (1088), and the plurality of positioning portions (1044) pass through the plurality of positioning holes (1088) to position the first conductive plate (108) on the first holder (104).

8. The battery structure (1) of claim 1 further **characterized in that** the first conductive plate (108) has a plurality of first pads (1080) in contact with the plurality of battery cells (102), the second conductive plate (110) has a plurality of second pads (1100) in contact with the plurality of battery cells (102), a shape of each of the plurality of first pads (1080) is different from a shape of each of the plurality of second pads (1100), each of the plurality of first pads (1080) is connected to the first conductive plate (108) by at least one first connecting portion (1082), each of the plurality of second pads (1100) is connected to the second conductive plate (110) by at least one second connecting portion (1102), and a total cross-sectional area of the at least one first connecting portion (1082) is smaller than a total cross-sectional area of the at least one second connecting portion (1102).

9. A battery module (10a, 10a') comprising:
a housing (100);
a plurality of battery cells (102) disposed in the housing (100);
a first holder (104) accommodating an end of each of the plurality of battery cells (102);
a second holder (106) accommodating another end of each of the plurality of battery cells (102);
a first conductive plate (108) disposed on the first holder (104) and electrically connected to the plurality of battery cells (102), the first conductive plate (108) having two first restraining portions (1084);
a second conductive plate (110) disposed on the second holder (106) and electrically connected to the plurality of battery cells (102); **characterized by**
a conductive elastic member (112, 112') restrained on the first conductive plate (108) by the two first restraining portions (1084).

10. The battery module (10a) of claim 9 further **characterized in that** the conductive elastic member (112) is a coil spring with two ring-shaped ends (1120), and the two ring-shaped ends (1120) are hooked by the two first restraining portions (1084).

11. The battery module (10a') of claim 9 further **characterized in that** the conductive elastic member (112') comprises an elastic structure (1122) and a conductive material (1124), the elastic structure (1122) is covered with the conductive material (1124), and the two first restraining portions (1084) abut against two ends of the elastic structure (1122).

12. The battery module (10a, 10a') of claim 9 further **characterized in that** the first holder (104) has a plurality of second restraining portions (1042), the first conductive plate (108) further has a plurality of through holes (1086), and the plurality of second restraining portions (1042) pass through the plurality of through holes (1086) and are located at opposite sides of the conductive elastic member (112, 112') in a radial direction of the conductive elastic member (112, 112').

13. The battery module (10a, 10a') of claim 12 further **characterized in that** the first holder (104) further has a plurality of accommodating holes (1040) for accommodating the plurality of battery cells (102), and the plurality of second restraining portions (1042) extend to the plurality of accommodating holes (1040) to restrain the plurality of battery cells (102) in the plurality of accommodating holes (1040).

14. The battery module (10a, 10a') of claim 9 further **characterized in that** the first holder (104) has a plurality of positioning portions (1044), the first conductive plate (108) further has a plurality of positioning holes (1088), and the plurality of positioning portions (1044) pass through the plurality of positioning holes (1088) to position the first conductive plate (108) on the first holder (104).

15. The battery module (10a, 10a') of claim 9 further **characterized in that** the first conductive plate (108) has a plurality of first pads (1080) in contact with the plurality of battery cells (102), the second conductive plate (110) has a plurality of second pads (1100) in contact with the plurality of battery cells (102), a shape of each of the plurality of first pads (1080) is different from a shape of each of the plurality of second pads (1100), each of the plurality of first pads (1080) is connected to the first conductive plate (108) by at least one first connecting portion (1082), each of the plurality of second pads (1100) is connected to the second conductive plate (110) by at least one second connecting portion (1102), and a total cross-sectional area of the at least one first connecting portion (1082) is smaller than a total cross-sectional area of the at least one second connecting portion (1102).

## Patentansprüche

1. Batterieaufbau (1), welcher umfasst:
zwei Batteriemodule (10a, 10a', 10b), die übereinander gestapelt sind, worin jedes der beiden Batteriemodule (10a, 10a', 10b) umfasst:
ein Gehäuse (100);
mehrere Batteriezellen (102), die in dem Gehäuse (100) angeordnet sind;
einen ersten Halter (104), der ein Ende jeder der mehreren Batteriezellen (102) aufnimmt;
einen zweiten Halter (106), der ein anderes Ende jeder der mehreren Batteriezellen (102) aufnimmt;
eine erste leitfähige Platte (108), die auf dem ersten Halter (104) angeordnet und mit den mehreren Batteriezellen (102) elektrisch verbunden ist; und
eine zweite leitfähige Platte (110), die auf dem zweiten Halter (106) angeordnet und mit den mehreren Batteriezellen (102) elektrisch verbunden ist;
**gekennzeichnet durch** ein leitfähiges elastisches Element (112, 112'), das zwischen der ersten leitfähigen Platte (108) und der zweiten leitfähigen Platte (110) der beiden Batteriemodule (10a, 10a', 10b) angeordnet ist und mit diesen in Kontakt steht.

2. Batterieaufbau (1) nach Anspruch 1, ferner **dadurch gekennzeichnet, dass** die erste leitfähige Platte (108) eines der beiden Batteriemodule (10a, 10a') zwei erste Halteabschnitte (1084) aufweist und das leitfähige elastische Element (112, 112') durch die beiden ersten Halteabschnitte (1084) auf der ersten leitfähigen Platte (108) gehalten wird.

3. Batterieaufbau (1) nach Anspruch 2, ferner **dadurch gekennzeichnet, dass** das leitfähige elastische Element (112) eine Schraubenfeder mit zwei ringförmigen Enden (1120) ist und die beiden ringförmigen Enden (1120) durch die beiden ersten Halteabschnitte (1084) eingehängt sind.

4. Batterieaufbau (1) nach Anspruch 2, ferner **dadurch gekennzeichnet, dass** das leitfähige elastische Element (112') eine elastische Struktur (1122) und ein leitfähiges Material (1124) umfasst, worin die elastische Struktur (1122) mit dem leitfähigen Material (1124) bedeckt ist und die beiden ersten Halteabschnitte (1084) an zwei Enden der elastischen Struktur (1122) an.

5. Batterieaufbau (1) nach Anspruch 1, ferner **dadurch gekennzeichnet, dass** der erste Halter (104) mehrere zweite Halteabschnitte (1042) aufweist, die erste leitfähige Platte (108) ferner mehrere Durchgangslöcher (1086) aufweist und die mehreren zweiten Halteabschnitte (1042) durch die mehreren Durchgangslöcher (1086) hindurchgehen und sich an gegenüberliegenden Seiten des leitfähigen elastischen Elements (112, 112') in einer radialen Richtung des leitfähigen elastischen Elements (112, 112') befinden.

6. Batterieaufbau (1) nach Anspruch 5, ferner **dadurch gekennzeichnet, dass** der erste Halter (104) ferner mehrere Aufnahmeöffnungen (1040) zum Aufnehmen der mehreren Batteriezellen (102) aufweist, und sich die mehreren zweiten Halteabschnitte (1042) zu den mehreren Aufnahmeöffnungen (1040) erstrecken, um die mehreren Batteriezellen (102) in den mehreren Aufnahmeöffnungen (1040) zu halten.

7. Batterieaufbau (1) nach Anspruch 1, ferner **dadurch gekennzeichnet, dass** der erste Halter (104) mehrere Positionierungsabschnitte (1044) aufweist, die erste leitfähige Platte (108) ferner mehrere Positionierungslöcher (1088) aufweist und die mehreren Positionierungsabschnitte (1044) durch die mehreren Positionierungslöcher (1088) hindurchgehen, um die erste leitfähige Platte (108) auf dem ersten Halter (104) zu positionieren.

8. Batterieaufbau (1) nach Anspruch 1, **dadurch gekennzeichnet, dass** die erste leitfähige Platte (108) mehrere erste Kontaktflächen (1080) aufweist, die mit den mehreren Batteriezellen (102) in Kontakt stehen, die zweite leitfähige Platte (110) mehrere zweite Kontaktflächen (1100) aufweist, die mit den mehrere Batteriezellen (102) in Kontakt stehen, sich die Form jedes der mehreren ersten Kontaktflächen (1080) von der Form jedes der mehreren zweiten Kontaktflächen (1100) unterscheidet, jede der mehreren ersten Kontaktflächen (1080) über mindestens einen ersten Verbindungsabschnitt (1082) mit der ersten leitfähigen Platte (108) verbunden ist, jedes der mehreren zweiten Pads (1100) durch mindestens einen zweiten Verbindungsabschnitt (1102) mit der zweiten leitfähigen Platte (110) verbunden ist, und die Gesamtquerschnittsfläche des mindestens einen ersten Verbindungsabschnitts (1082) kleiner ist als die Gesamtquerschnittsfläche des mindestens einen zweiten Verbindungsabschnitts (1102).

9. Batteriemodul (10a, 10a'), welches umfasst:
ein Gehäuse (100);
mehrere Batteriezellen (102), die in dem Gehäuse (100) angeordnet sind;
einen ersten Halter (104), der ein Ende jeder der mehreren Batteriezellen (102) aufnimmt;
einen zweiten Halter (106), der ein anderes Ende jeder der mehreren Batteriezellen (102) aufnimmt;
eine erste leitfähige Platte (108), die auf dem ersten Halter (104) angeordnet und mit den mehreren Batteriezellen (102) elektrisch verbunden ist, worin die erste leitfähige Platte (108) zwei erste Halteabschnitte (1084) aufweist;
eine zweite leitfähige Platte (110), die auf dem zweiten Halter (106) angeordnet und mit den mehreren Batteriezellen (102) elektrisch verbunden ist;
**gekennzeichnet durch** ein leitfähiges elastisches Element (112, 112'), das durch die beiden ersten Halteabschnitte (1084) auf der ersten leitfähigen Platte (108) gehalten wird.

10. Batteriemodul (10a) nach Anspruch 9, ferner **dadurch gekennzeichnet, dass** das leitfähige elastische Element (112) eine Schraubenfeder mit zwei ringförmigen Enden (1120) ist und die beiden ringförmigen Enden (1120) durch die beiden ersten Halteabschnitte (1084) eingehängt sind.

11. Batteriemodul (10a') nach Anspruch 9, ferner **dadurch gekennzeichnet, dass** das leitfähige elastische Element (112') eine elastische Struktur (1122) und ein leitfähiges Material (1124) umfasst, die elastische Struktur (1122) mit dem leitfähigen Material (1124) bedeckt ist und die beiden ersten Halteabschnitte (1084) an zwei Enden der elastischen Struktur (1122) anliegen.

12. Batteriemodul (10a, 10a') nach Anspruch 9, ferner **dadurch gekennzeichnet, dass** der erste Halter (104) mehrere zweite Halteabschnitte (1042) aufweist, die erste leitfähige Platte (108) ferner mehrere Durchgangslöcher (1086) aufweist und die mehreren zweiten Halteabschnitte (1042) durch die mehreren Durchgangslöcher (1086) hindurchgehen und sich an abgewandten Seiten des leitfähigen elastischen Elements (112, 112') in einer radialen Richtung des leitfähigen elastischen Elements (112, 112') befinden.

13. Batteriemodul (10a, 10a') nach Anspruch 12, ferner **dadurch gekennzeichnet, dass** der erste Halter (104) ferner mehrere Aufnahmebohrungen (1040) zum Aufnehmen der mehreren Batteriezellen (102) aufweist, und sich die mehreren zweiten Halteabschnitte (1042) zu den mehreren Aufnahmeöffnungen (1040) erstrecken, um die mehreren Batteriezellen (102) in den mehreren Aufnahmeöffnungen (1040) zu halten.

14. Batteriemodul (10a, 10a') nach Anspruch 9, ferner **dadurch gekennzeichnet, dass** der erste Halter (104) mehrere Positionierungsabschnitte (1044) aufweist, die erste leitfähige Platte (108) ferner mehrere Positionierungslöcher (1088) aufweist und die mehreren Positionierungsabschnitte (1044) durch die mehreren Positionierungslöcher (1088) hindurchgehen, um die erste leitfähige Platte (108) auf dem ersten Halter (104) zu positionieren.

15. Batteriemodul (10a, 10a') nach Anspruch 9, ferner **dadurch gekennzeichnet, dass** die erste leitfähige Platte (108) mehrere erste Kontaktflächen (1080) aufweist, die mit den mehreren Batteriezellen (102) in Kontakt stehen, die zweite leitfähige Platte (110) mehrere zweite Kontaktflächen (1100) aufweist, die mit den mehreren Batteriezellen (102) in Kontakt stehen, sich die Form jedes der mehreren ersten Kontaktflächen (1080) von der Form jedes der mehreren zweiten Kontaktflächen (1100) unterscheidet, jede der mehreren ersten Kontaktflächen (1080) durch mindestens einen ersten Verbindungsabschnitt (1082) mit der ersten leitfähigen Platte (108) verbunden ist, jedes der mehreren zweiten Pads (1100) über mindestens einen zweiten Verbindungsabschnitt (1102) mit der zweiten leitfähigen Platte (110) verbunden ist, und die Gesamtquerschnittsfläche des mindestens einen ersten Verbindungsabschnitts (1082) kleiner ist als die Gesamtquerschnittsfläche des mindestens einen zweiten Verbindungsabschnitts (1102).

## Revendications

1. Structure de batterie (1), comprenant:
deux modules de batterie (10a, 10a', 10b) empilés l'un sur l'autre, chacun des deux modules de batterie (10a, 10a', 10b) comprenant:
un boîtier (100);
une pluralité de cellules de batterie (102) disposées dans le boîtier (100);
un premier support (104) logeant une extrémité de chacune de la pluralité de cellules de batterie (102);
un deuxième support (106) logeant une autre extrémité de chacune de la pluralité de cellules de batterie (102);
une première plaque conductrice (108) disposée sur le premier support (104) et connectée électriquement à la pluralité de cellules de batterie (102); et
une deuxième plaque conductrice (110) disposée sur le deuxième support (106) et connectée électriquement à la pluralité de cellules de batterie (102);
**caractérisé par** un élément élastique conducteur (112, 112') disposé entre et en contact avec la première plaque conductrice (108) et la deuxième plaque conductrice (110) des deux modules de batterie (10a, 10a', 10b).

2. Structure de batterie (1) selon la revendication 1, **caractérisée en outre en ce que** la première plaque conductrice (108) de l'un des deux modules de batterie (10a, 10a') comporte deux premières parties de retenue (1084), et l'élément élastique conducteur (112, 112') est retenu sur la première plaque conductrice (108) par les deux premières parties de retenue (1084).

3. Structure de batterie (1) selon la revendication 2, **caractérisée en outre en ce que** l'élément élastique conducteur (112) est un ressort hélicoïdal avec deux extrémités en forme d'anneau (1120), et les deux extrémités en forme d'anneau (1120) sont accrochées par les deux premières parties de retenue (1084).

4. Structure de batterie (1) selon la revendication 2, **caractérisée en outre en ce que** l'élément élastique conducteur (112') comprend une structure élastique (1122) et un matériau conducteur (1124), la structure élastique (1122) est recouverte du matériau conducteur (1124), et les deux premières parties de retenue (1084) butent contre les deux extrémités de la structure élastique (1122).

5. Structure de batterie (1) selon la revendication 1, **caractérisée en outre en ce que** le premier support (104) comporte une pluralité de deuxièmes parties de retenue (1042), la première plaque conductrice (108) comporte en outre une pluralité de trous traversants (1086), et la pluralité de secondes parties de retenue (1042) passent à travers la pluralité de trous traversants (1086) et sont situées sur les côtés opposés de l'élément élastique conducteur (112, 112') dans une direction radiale de l'élément élastique conducteur (112, 112').

6. Structure de batterie (1) selon la revendication 5, **caractérisée en outre en ce que** le premier support (104) comporte en outre une pluralité de trous de logement (1040) destinés à loger la pluralité de cellules de batterie (102), et la pluralité de secondes parties de retenue (1042) s'étendent jusqu'à la pluralité de trous de logement (1040) afin de retenir la pluralité de cellules de batterie (102) dans la pluralité de trous de logement (1040).

7. Structure de batterie (1) selon la revendication 1, **caractérisée en outre en ce que** le premier support (104) comporte une pluralité de parties de positionnement (1044), la première plaque conductrice (108) comporte en outre une pluralité de trous de positionnement (1088), et la pluralité de parties de positionnement (1044) passe à travers la pluralité de trous de positionnement (1088) pour positionner la première plaque conductrice (108) sur le premier support (104).

8. Structure de batterie (1) selon la revendication 1, **caractérisée en outre en ce que** la première plaque conductrice (108) comporte une pluralité de premiers plots (1080) en contact avec la pluralité de cellules de batterie (102), la deuxième plaque conductrice (110) comporte une pluralité de deuxièmes plots (1100) en contact avec la pluralité de cellules de batterie (102), la forme de chacun des multiples premiers plots (1080) est différente de la forme de chacun des multiples seconds plots (1100), chacun des multiples premiers plots (1080) est connecté à la première plaque conductrice (108) par au moins une première partie de connexion (1082), chacun des multiples seconds plots (1100) est connecté à la seconde plaque conductrice (110) par au moins une seconde partie de connexion (1102), et la section transversale totale de la au moins une première partie de connexion (1082) est inférieure à la section transversale totale de la au moins une seconde partie de connexion (1102).

9. Module de batterie (10a, 10a') comprenant:
un boîtier (100);
une pluralité de cellules de batterie (102) disposées dans le boîtier (100);
un premier support (104) logeant une extrémité de chacune de la pluralité de cellules de batterie (102);
un deuxième support (106) logeant une autre extrémité de chacune des multiples cellules de batterie (102);
une première plaque conductrice (108) disposée sur le premier support (104) et connectée électriquement aux multiples cellules de batterie (102), la première plaque conductrice (108) comportant deux premières parties de retenue (1084);
une deuxième plaque conductrice (110) disposée sur le deuxième support (106) et connectée électriquement à la pluralité de cellules de batterie (102);
**caractérisé par** un élément élastique conducteur (112, 112') retenu sur la première plaque conductrice (108) par les deux premières parties de retenue (1084).

10. Module de batterie (10a) selon la revendication 9, **caractérisé en outre en ce que** l'élément élastique conducteur (112) est un ressort hélicoïdal avec deux extrémités en forme d'anneau (1120), et les deux extrémités en forme d'anneau (1120) sont accrochées par les deux premières parties de retenue (1084).

11. Module de batterie (10a') selon la revendication 9, **caractérisé en outre en ce que** l'élément élastique conducteur (112') comprend une structure élastique (1122) et un matériau conducteur (1124), la structure élastique (1122) est recouverte du matériau conducteur (1124), et les deux premières parties de retenue (1084) butent contre les deux extrémités de la structure élastique (1122).

12. Module de batterie (10a, 10a') selon la revendication 9, **caractérisé en outre en ce que** le premier support (104) comporte une pluralité de secondes parties de retenue (1042), la première plaque conductrice (108) comporte en outre une pluralité de trous traversants (1086), et la pluralité de secondes parties de retenue (1042) traversent la pluralité de trous traversants (1086) et sont situées sur les côtés opposés de l'élément élastique conducteur (112, 112') dans une direction radiale de l'élément élastique conducteur (112, 112').

13. Module de batterie (10a, 10a') selon la revendication 12, est en outre **caractérisé en ce que** le premier support (104) comporte en outre une pluralité de trous de logement (1040) destinés à loger la pluralité de cellules de batterie (102), et la pluralité de secondes parties de retenue (1042) s'étendent jusqu'à la pluralité de trous de logement (1040) pour retenir la pluralité de cellules de batterie (102) dans la pluralité de trous de logement (1040).

14. Module de batterie (10a, 10a') selon la revendication 9, **caractérisé en outre en ce que** le premier support (104) comporte une pluralité de parties de positionnement (1044), la première plaque conductrice (108) comporte en outre une pluralité de trous de positionnement (1088), et la pluralité de parties de positionnement (1044) passe à travers la pluralité de trous de positionnement (1088) pour positionner la première plaque conductrice (108) sur le premier support (104).

15. Module de batterie (10a, 10a') de la revendication 9 est en outre **caractérisé en ce que** la première plaque conductrice (108) comporte une pluralité de premiers plots (1080) en contact avec la pluralité de cellules de batterie (102), la deuxième plaque conductrice (110) comporte une pluralité de deuxièmes plots (1100) en contact avec la pluralité de cellules de batterie (102), la forme de chacun des multiples premiers plots (1080) est différente de la forme de chacun des multiples seconds plots (1100), chacun des multiples premiers plots (1080) est connecté à la première plaque conductrice (108) par au moins une première partie de connexion (1082), chacun des multiples seconds plots (1100) est connecté à la seconde plaque conductrice (110) par au moins une seconde partie de connexion (1102), et la surface transversale totale de la au moins une première partie de connexion (1082) est inférieure à la surface transversale totale de la au moins une seconde partie de connexion (1102).
